(19) Europäisches Patentamt

European Patent Office

Office européen des brevets

(11) Publication number: **0 201 306**
**A2**

# EUROPEAN PATENT APPLICATION

(21) Application number: **86303396.5**

(51) Int. Cl.⁴: **G02B 27/00**

(22) Date of filing: **06.05.86**

(30) Priority: **08.05.85 GB 8511662**
**04.11.85 GB 8527070**

(43) Date of publication of application:
**17.12.86 Bulletin 86/46**

(84) Designated Contracting States:
**AT BE CH DE FR GB IT LI LU NL SE**

(71) Applicant: **LAMBDA PHOTOMETRICS LIMITED**
**Lambda House Batford Mill**
**Harpenden Hertfordshire AL5 5BZ(GB)**

(72) Inventor: **Street, Graham Stewart Brandon**
**Impstone House Pamber Road**
**Silchester Reading Berkshire RG7 2NU(GB)**
Inventor: **Dashwood, Nigel John Robert**
**8 Brooke Road**
**Royston Hertfordshire SG8 7DR(GB)**
Inventor: **Anderson, John Douglas**
**122 Shelford Road Trumpington**
**Cambridge Cambridgeshire CB2 2NF(GB)**

(74) Representative: **Woodin, Anthony John et al**
**Fitzpatricks 53A High Street**
**Huntingdon Cambridgeshire PE18 6AQ(GB)**

(54) **Apparatus for providing uniform exposure at an exposing station.**

(57) Apparatus for producing uniform exposure at an exposing station comprises a source (1; 63, 64) of radiant energy; means (8 to 10; 27 to 30; 31 to 37; 41; 67, 70, 71) for redistributing said radiant energy in a uniform manner within a rotationally symmetric divergent cone (42) and/or over a predetermined cross-sectional area (53) for delivery to an exposing station; and means (2, 4 to 6; 15 to 18; 20, 21, 24, 25; 43 to 52; 59, 60; 69, 77 to 81) for controlling the level of said energy delivered in use to said exposing station (12 to 14; 56 to 58; 72, 75, 76). The source is preferably pulse operated and comprises at least one laser. The redistributing means preferably comprises an optically transmitting fibre and/or light guide.

FIG. 8.

## APPARATUS FOR PROVIDING UNIFORM EXPOSURE AT AN EXPOSING STATION

This invention relates to apparatus for controlling the exposure and uniformity within a defined area at an exposing station remote from a radiant source. In particular it may be used to improve the uniformity of exposure obtained from a pulsed source such as an eximer or nitrogen laser.

The characteristics of a nitrogen laser are such that the output beam, which has a rectangular cross section, typically 32 mms wide by 6 mms high, has more divergence in the broad than in the narrow dimension. Typical divergences of respectively 14 and 2 milliradians full angle may be observed. By using anamorphic imaging the two dimensions may be changed to be more equivalent. For instance the 32 mms dimension may be reduced to 20 mms and its corresponding divergence would become approximately 22 milliradians. Likewise the 6 mms dimension may be enlarged to 20 mms and its divergence would be reduced to 0.7 milliradians.

For many imaging systems it is desirable that the illumination be substantially uniform and rotationally symmetric. Furthermore a relatively small divergence is often required in order to maximise the systems efficiency whilst restricting the size of aperture required. In addition to the assymmetry of the dimensions of the output from a Nitrogen laser, it is usually found that the energy distribution within this overall envelope is not uniform, with concentrations of energy at one or more places being commonplace. Whilst uniformity of illumination can always be obtained by selecting a small proportion of the available energy, it is preferable to utilise this energy as efficiently as possible, in order to maximise the throughput of the exposing apparatus.

A second disadvantage of a source such as a pulsed nitrogen laser can be the consistency from pulse to pulse. In particular, the energy of a single pulse can depend on the repetition rate or delay since the last pulse (or discharge through the nitrogen gas), the gas flow rate and the charge voltage.

It is preferable for the system to be discharged on a regular basis and thus to establish steady state conditions.

The present invention provides a method and apparatus for the exposure of a photo-sensitive layer over a defined area which has, at least in preferred embodiments, considerable advantages over prior art methods. For example, apparatus according to the invention converts a highly nonuniform and assymetric output from a pulsed laser into a well behaved cone of uniformly distributed radiant energy. In certain embodiments the consistency of the output of the exposure system may be preserved independent of the frequency and timing of the required exposing pulses of energy.

Thus according to the present invention, there is provided apparatus for producing uniform exposure at an exposing station, comprising a source of radiant energy, means for controlling the level of said energy delivered to said exposing station and means for redistributing said transmitted energy in use uniformly within a divergent cone and/or over a pre-determined cross-sectional area prior to impingement on a photo-sensitive medium at said exposing station.

Advantageously the source is a pulsed source.

Preferably the source of radiant energy comprises at least one laser.

Advantageously said laser is an Ultra Violet laser such as a Nitrogen laser.

According to another aspect of the invention means for redistributing said transmitted energy comprises optical fibre means.

The optical fibre means may terminate with an end face which, in use, provides a uniform distribution of energy over a pre-determined cross-sectional area and imaging means may conveniently reimage said uniform distribution to a point in the proximity of the photo-sensitive medium.

Advantageously redistributing means includes a beam dissector having at least two distinct optical paths.

In certain embodiments the redistributing means includes two convergent optical components one of which is primarily convergent in a plane orthogonal to the plane of primary convergence of the other and arranged in use to converge the energy transmitted via each optical path to substantially the same point.

According to some embodiments of the invention transmission control means comprises means for blocking the transmission of energy from the source to the exposing station.

Advantageously blocking means comprises a component which in use, may be moved to a position in which it deflects the energy to an energy sink.

According to the invention blocking means is advantageously controlled to block a proportion of pulses of energy from the source generated, in use, to maintain a minimum frequency of operation of the source in excess of the required utilisation level of said pulses.

In certain embodiments a further aspect of the invention provides for the transmission control means to include means for varying the fraction of energy transmitted to the exposing station.

Preferably transmission control means includes a photosensor, arranged to detect the level of energy transmitted by the redistributing means. This may be accomplished by detecting a portion of the energy transmitted or by detecting the secondary radiation emitted by phosphorescent means exposed to the transmitted energy. Advantageously electronic sampling and integration means are provided to process signals received from the photosensor so that, in use, the required exposure level is maintained at the exposing station.

The invention will now be described by way of example with reference to the accompanying drawings, in which:

Figure 1 shows an exposure system in diagrammatic form in accordance with the invention.

Figure 2 shows in plan view an arrangement in accordance with the invention for controlling the energy of exposing pulses derived from a pulsed UV source.

Figure 3 shows in accordance with the invention a method of reshaping a beam of energy from a UV laser using beam dissection.

Figure 4 shows an alternative embodiment of a beam dissector in accordance with the invention.

Figure 5 illustrates how in accordance with the invention the distribution of energy entering an optical fibre is related to that emerging therefrom.

Figure 6 shows in schematic form an electronic circuit for monitoring the required level of exposure at an exposing station.

Figure 7 illustrates an alternative imaging system comprised of optical components arranged in accordance with the invention.

Figure 8 shows in schematic form a system utilising two laser sources in accordance with the invention.

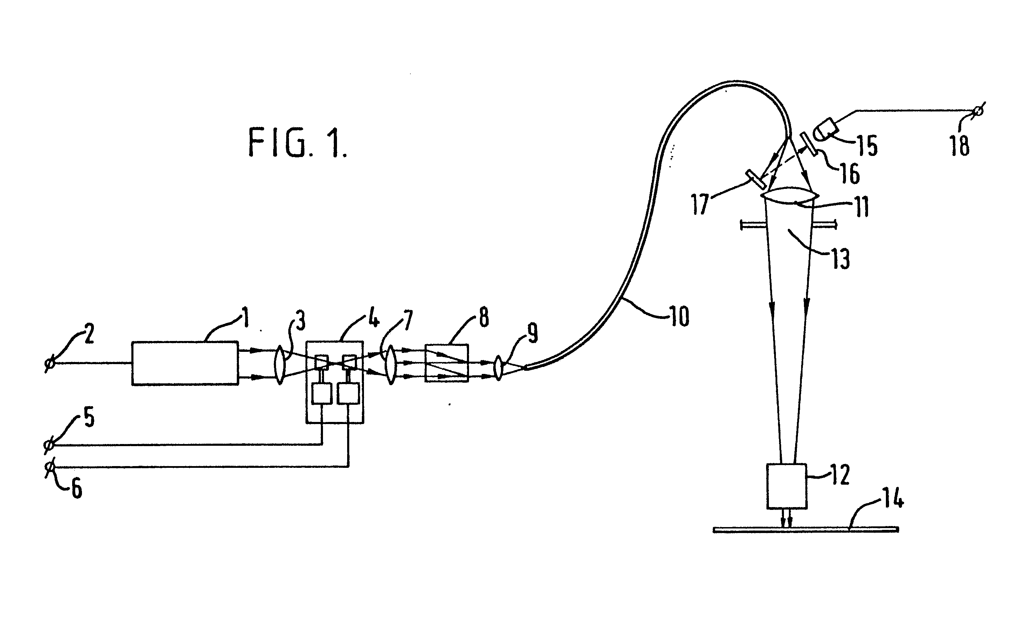

A system for exposing photoresist on a chromium substrate in accordance with the invention and for use in generating a precision pattern for the production of an integrated circuit mask is shown diagrammatically in Figure 1.

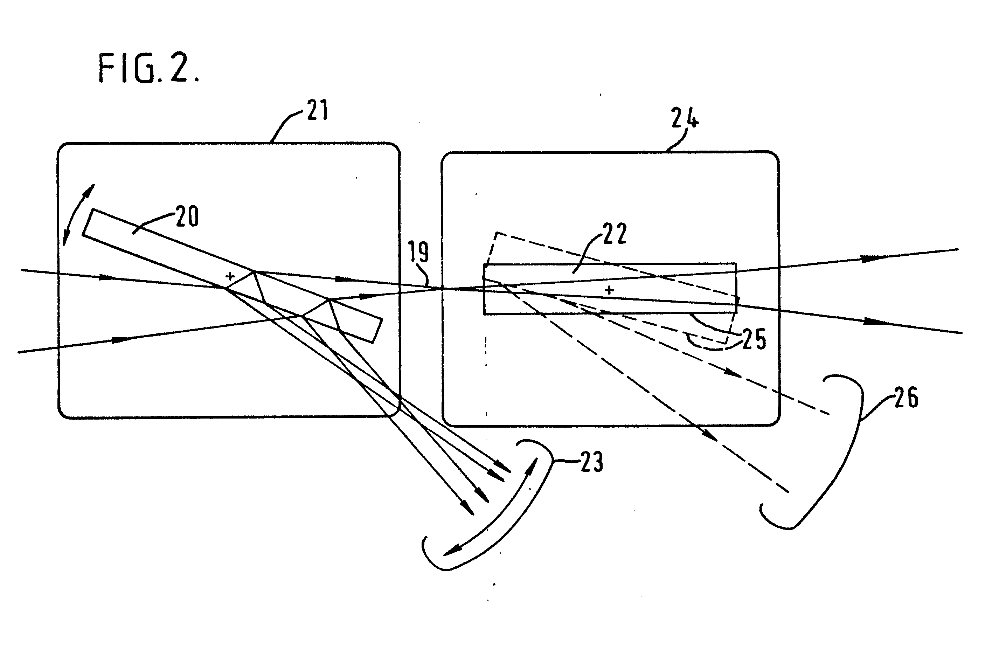

A nitrogen laser 1 which may be triggered by a request for a pulse of energy by a suitable trigger pulse on input 2 emits UV radiation in a roughly collimated beam of rectangular cross section through lens 3. Two transmitting glass plates, forming part of an energy control mechanism 4, may each be rotated about an axis at high speed by actuators driven respectively by signals on inputs 5 and 6. The control mechanism 4 is placed close to the focus of the beam formed by lens 3 and is more fully illustrated with reference to figure 2.

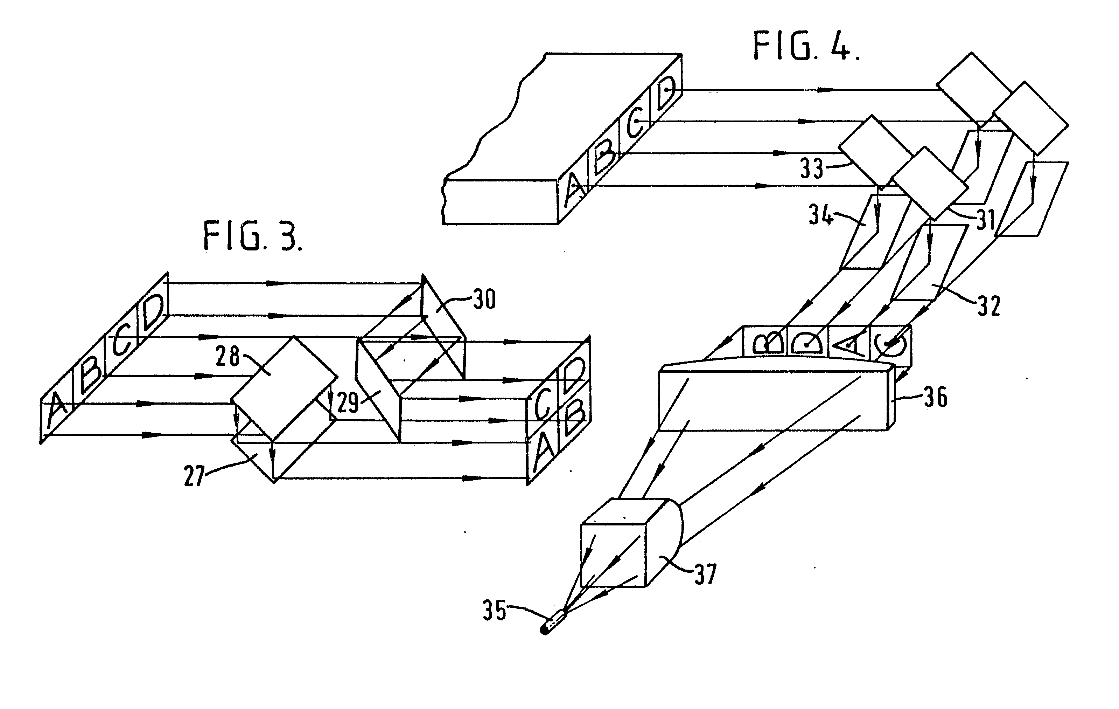

After passing through control mechanism 4 the beam is recollimated by lens 7 following which it is reshaped by a beam dissector 8, shown schematically in more detail in Figure 3. The beam dissector 8 provides the beam with an approximately square envelope without altering the divergence in either dimension. Lens 9 forms two small, preferably coincident, foci at the end of a single optical fibre 10.

A cone of energy is emitted by the fibre, the end of which is imaged by Lens 11 onto the pupil of lens assembly 12.

Lens 12 forms an image of aperture 13 on photoresist coated plate 14. In use both the dimensions of aperture 13 and the position of plate 14 are controlled by the pattern generation equipment to which this embodiment of the invention is added. Conventionally this equipment would use a mercury arc lamp with a timed shutter to expose the photoresist. The lens assembly 12, the controllable aperture 13, and the resist coated plate 14 together constitute the exposing station.

In order to monitor the UV energy transmitted by the fibre and thus to establish the level of exposure resulting from a pulse of laser radiation, a photocell 15 receives visible radiation through a UV blocking window 16 from a phosphor coated plate 17. Whilst the UV laser pulse has a duration of the order of 10 nanoseconds, the stray energy striking plate 17 is sufficient to cause phosphorescence of a duration of tens of microseconds, allowing satisfactory quantitative measurements to be made via the output 18 of photocell 15.

The energy control mechanism 4 is illustrated with reference to Figure 2 in which the UV beam is focussed to a minimum width at location 19 after passing through an inclined plate 20. This plate may be orientated at various angles with respect to the incident energy by a moving coil mechanism shown partly as rectangle 21. The percentage of light reflected by plate 20 and thus deflected from location 19 is determined by the angle of incidence of the plate. Once the system has been characterised the amount of energy transmitted to the second plate or shutter 22 may to a good approximation be made independent of the variations in pulse energy arriving at plate 20. Typically these variations are due to a variation in the period between requested pulses in energy. Utilising reflection losses from the faces of plate 20 and disposing of these into an energy dump 23, the transmission of plate 20 may be varied easily from 80% to 50% for an angle of deflection of less than 15 degrees and an average angle of incidence of 70 degrees.

In practice the laser source may provide energy pulses on a regular basis even when the system does not require one. This ensures steady state stability and minimises the risk of gross energy fluctuations. This is facilitated by shutter 22 which operates as follows. In normal use the plate is positioned as shown by the solid line. The two end faces are transmitting. The moving coil actuator shown as a rectangle 24 can place the plate in the alternative position shown by the dashed line. Face 25 of plate 22 is coated to reflect the entire beam into energy dump 26. Thus pulses may be triggered internally by the laser control system but are then deflected into dump 26 and, whilst keeping the system primed, do not register an exposure.

The beam dissector shown in Figure I as element 8 is illustrated schematically in figure 3, in which it is assumed that the envelope of the UV beam has an aspect ratio of approximately four to one prior to entering the dissector. Four elemental square areas A, B, C and D are shown. A pair of parallel mirrors 27 and 28 displace the paths of rays from elements A and B vertically, whilst mirrors 29 and 30 displace the rays from C and D horizontally by twice this amount. This rearranges the beam cross section to be approximately square, which provides a better geometry for focussing onto the end of fibre 10 through lens 9. It will be clear that the parallel mirror pairs may suitably be replaced by internally reflecting rhomboids.

As has been mentioned the output of a Nitrogen UV laser is not only rectangular in cross section, but also displays more divergence in the longer dimension. An alternative beam dissector in accordance with this invention which provides both a squarer cross section and more uniform divergence leading to the possibility of a smaller focussed image and/or cone angle prior to entry into the fibre is illustrated with reference to figure 4.

For the purposes of this illustration it is assumed that the aspect ratio of the input beam shown as four adjacent square elements A, B, C and D is four to one and that the divergence of the beam is at least four times greater in the long than in the short direction.

In this embodiment each element is rotated through 90 degrees by two mirrors and rearranged in sequence. Thus element A is rotated by mirrors 31 and 32 whilst B is rotated by mirrors 33 and 34 and so on. The net result is a composite beam with an envelope having an aspect ratio of four to one but this time the large divergence is in the narrow dimension. Two cylindrical lenses may now be used to converge this beam onto the end of a fibre 35 a small section of which is shown. The focal lengths of the two cylinders may be chosen to form an image on the fibre having approximately equal width and height.

Thus the dimension having low divergence has a longer focal length requirement satisfied by lens 36 whereas lens 37 caters for the higher divergence with a shorter focal length but need only handle a narrower beam.

It will be apparent that a beam dissector of this general design may be used to combine the outputs of two lasers into one composite beam, each laser beam conveniently entering the dissector at different positions and, if desirable, from different directions.

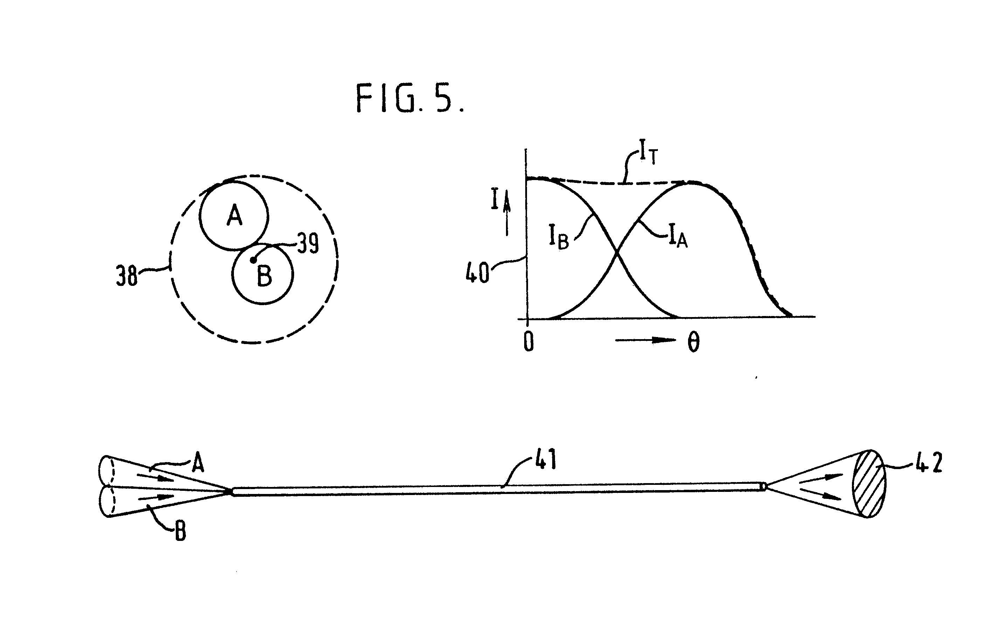

An important aspect of this invention is the use of a single optical fibre or other light guide, such as a liquid light guide, as the means for transmitting the energy following reshaping by the beam dissector. The key requirement is that the energy distribution at the aperture 13 in figure I should be uniform over the full aperture. In addition to providing a very convenient transport for UV radiation from the laser source to the exposing station , the optical fibre has very good characteristics for achieving this uniformity. No matter what the spatial distribution of light entering the fibre, this is completely scrambled to uniformly fill the output section on exiting the fibre. Furthermore, light entering the fibre from any direction but at a defined angle to the fibre's optical axis and within the numerical aperture of the fibre, emerges uniformly spread on a cone having approximately the same half angle, at the output end of the fibre. Thus a combination of quite separate input beams can result in a substantially uniform output distribution. This is illustrated with reference to Figure 5.

Two elements of a composite beam are shown diagrammatically in section in detail 38. The central axis 39 represents the optical axis of the fibre, whereas circle A represents one element converging onto axis 39 whereas element B is closer to the axis and also converging onto it. The dashed circle shown as the boundary of 38 represents the exscribed circle and, thus,the effective output cone exiting from the fibre. Allowing for the greater spreading of A on a larger circle than B (A being further off axis with respect to the fibre than B) the peak energy of A must be greater than B. Following rotational spreading the intensity contributions as a function of angle from the optical axis are shown in detail 40. Element B contributes the inner curve $I_B$ whilst element A contributes the curve $I_A$. Providing the two are suitably placed, a good "top hat" distribution of energy is achieved, shown as curve $I_T$ . The whole arrangement is shown - schematically below. Two small cones of energy A and B enter the fibre 41 and exit as a uniformly distributed cone 42. The output of the beam dissector illustrated in Figure 4 produces four separate elements each of which may be arranged to produce a circularly symmetric distribution of energy, the aggregate of which produces the desired uniform distribution.

It will also follow that two or more distinct sources of radiant energy may be combined into a single optical fibre or array of fibres the output of which would be a substantially uniformly distributed cone of energy.

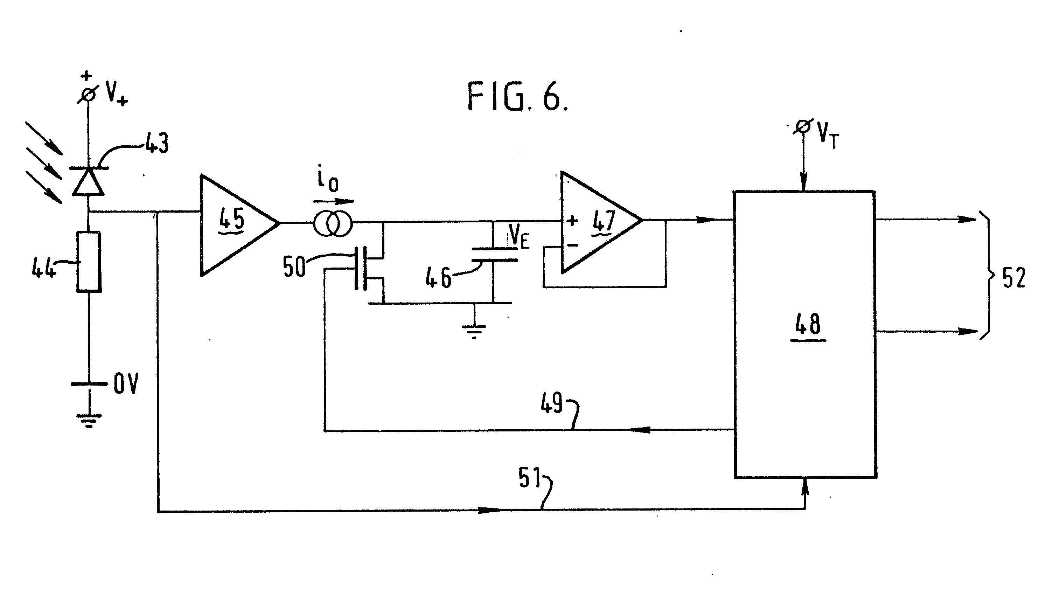

It is an objective of this invention to ensure that uniformly distributed energy arrives at the area to be exposed at the exposing station. The variable transmission plate 20 shown in Figure 2 will accommodate predictable variations. The photosensor 15 shown in Figure 1 is arranged to monitor system performance. Under a further refinement of the invention a photo detector may be used to provide a quantitative correction to the exposure provided. This is illustrated with reference to Figure 6 in which UV radiation causes a reverse biased photodiode 43 to develop a voltage across resistor 44. Amplifier 45 acts as a current source and, to first approximation, the current $i_o$ causes a charge to be stored by the capacitor 46 which is directly proportional to the number of photons which have arrived at photocell 43. The voltage $V_E$ on capacitor 46 is a direct representation of the exposure at the surface being exposed and is buffered by amplifier 47. A circuit shown schematically as rectangle 48 performs a comparison function, so that, when the required number of photons has arrived at cell 43 an output is generated on line 49 which causes the FET 50 to discharge the capacitor 46. The required number of photons may be selected by setting a threshold voltage $V_T$. The output of diode 43 may also be used via line 51 by circuit 48, as a validation of the performance of the laser source and/or as a trigger signal. The remaining outputs 52 from circuit 48 provide the system with status and control information. At its simplest level the system is not allowed to move to the next area to be exposed until the required exposure has been achieved. In systems where the laser energy reaching the area to be exposed may be varied under system control, a signal representing the additional exposure may be provided and used to control the transmission of energy to the exposing station at the next laser pulse.

It will be clear that other monitoring regimes are possible. Arrangements which take account of possible non linearities in the system are clearly alternatives.

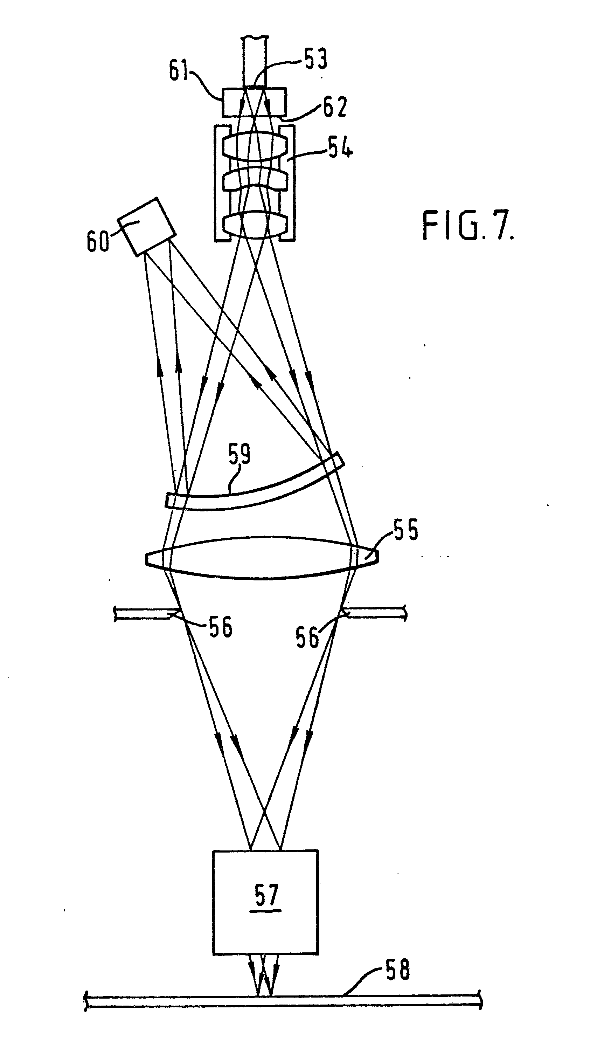

An alternative embodiment to the fibre imaging system described in the embodiment of Figure 1 is illustrated with reference to Figure 7. This differs from the Figure 1 arrangement in that the fibre end is not imaged onto the pupil of lens assembly 12, but rather onto the aperture 13 which is itself imaged onto the photoresist 14. It remains desirable to have a narrow and well behaved cone of light emerging from the fibre as it is this angle distribution which determines in this embodiment the spatial distribution of light at the pupil of lens assembly 12.

Thus, a well polished fibre end 53 provides a spatially uniform disc of light and each point of this disc radiates in a forward cone. A small UV transparent window 61 may, optionally, be bonded with a UV transmitting cement to the fibre end 53. This provides two advantages. First, it prevents unwanted particles from contaminating the uniformly radiating disc and, second, it can be antireflection coated on face 62 to improve the overall transmission of the fibre subsystem. A small lens assembly 54, comprising three components to minimise spherical aberration, forms, in combination with a condenser lens 55, a magnified uniform image of fibre end 53 at the plane of aperture 56 (equivalent to aperture 13 in Figure 1). In turn, condenser lens 55 forms an image of the distribution of light exiting lens assembly 54 at the final imaging lens assembly 57, (equivalent to assembly 12 in Figure 1). In practice, the position of fibre end 53 may be adjusted relative to lens assembly 54 to achieve a result intermediate between that of Figure 1, in which the fibre end is imaged onto the pupil of assembly 57 and the point at which it is imaged onto aperture 56.

One advantage of the arrangement of Figure 7 is that minor changes in angular distribution during operation do not affect the uniformity of the image formed on the photoresist 58. A second advantage is that, for a defined maximum size of aperture 56, the magnification of lens assembly 54 may be so chosen as to provide a circle of illumination, having a diameter just in excess of the aperture's maximum diagonal, thus utilising the available energy most efficiently.

As there is no effective fringe field in which to place a photodetector (equivalent to photocell 15 in Figure 1), a low intensity off-axis image of the light exiting assembly 54 is provided by the uncoated face of an angled curved reflector 59, which passes the majority of light incident upon it to condenser 55. The reflected light is monitored by detector assembly 60.

A further embodiment of the invention uses two laser sources. As stated above, this invention allows more than one source of radiant energy to be combined to provide a uniform exposure at the exposing station. Where a nitrogen laser, or any similar laser, such as one of a variety of excimer laser sources, is used, extremely short pulses of energy, typically of duration of 20 nanoseconds or less, arrive at the medium to be exposed, such as photoresist. It is frequently an advantage that the energy needed to effect full exposure of the photoresist be delivered over a time interval longer than the intrinsic duration of a laser pulse. In particular it helps to avoid the problem of ablation. A doubly pulsed single source may be used or, conveniently, the outputs of two lasers may be combined with the introduction of a small delay between them. This delay may be selected to provide an overall short duration (eg 1 microsecond) comparable to or less than the duration of a conventional flash exposure, typically of the order of 10 microseconds and in any event, less than I millisecond, and long enough to provide optimum exposure at levels of energy well in excess of a conventional flash source.

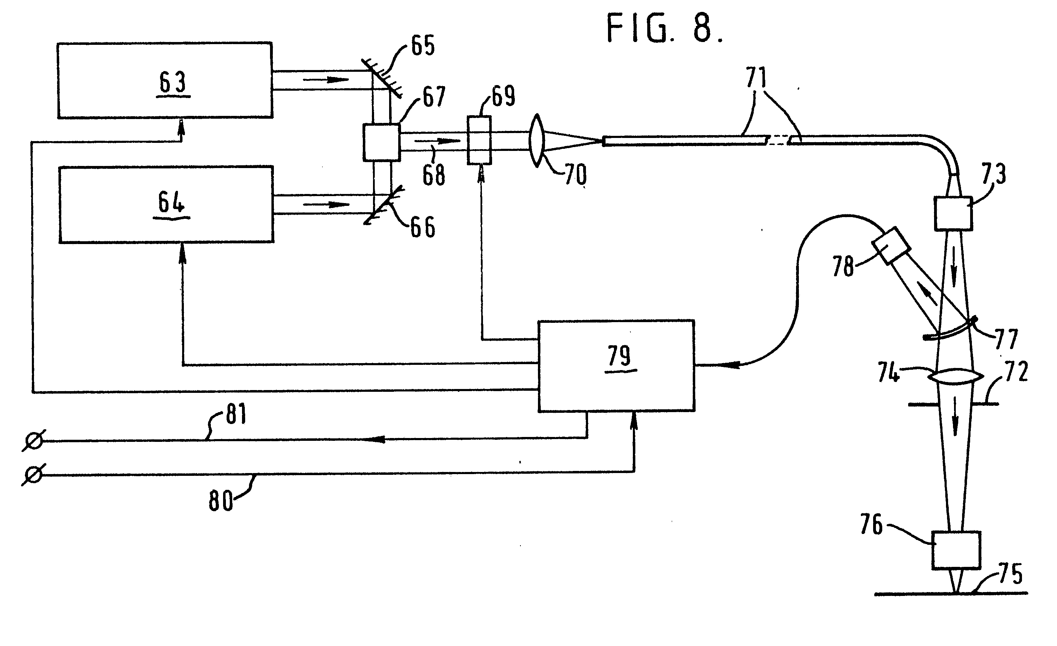

A block schematic layout of a two laser system is shown in Figure 8.

The outputs from two lasers 63 and 64 are combined by auxiliary mirrors 65 and 66 through a beam dissector 67 into a composite beam 68. Beam 68 passes via a controllable attenuation device 69 and a focussing lens assembly 70 into a fibre 71. The output from fibre 71 substantially illuminates a controllable aperture 72 via lens assembly 73 and condenser lens 74. Aperture 72 is imaged onto the photoresist 75 by process lens assembly 76. A small proportion of the energy leaving lens assembly 73 is deflected by curved transmitting component 77 onto a photodetector 78, the output of which is fed to exposure control circuit 79. This circuit, substantially in the form illustrated with reference to Figure 6, fires both lasers in addition to controlling the transmission of the optical train by affecting the position or state of an attenuating or blocking component in device 69. This may be an electro-mechanical device or one employing electro-optic principles. An input 80 to circuit 79 commences the process and an output 81 provides a handshake signal to the system controlling the overall pattern generation process.

It will be clear that a variety of configurations are possible in which two or more pulsed lasers are combined in a single exposing apparatus. The multiplicity provided overcomes not only the problem of exceeding the maximum tolerable instantaneous exposure level, but also provides redundancy in the equipment, thus increasing reliability.

**Claims**

1. Apparatus for producing uniform exposure at an exposing station comprising a source (1; 63,64) of radiant energy; means (8 to 10; 27 to 30; 31 to 37; 41; 67, 70, 71) for redistributing said radiant energy in a uniform manner within a rotationally symmetric divergent cone (42) and/or over a predetermined cross-sectional area (53) for delivery to an exposing station; and means (2, 4 to 6, 15 to 18; 20, 21, 24, 25; 43 to 52; 59, 60; 69, 77 to 81) for controlling the level of said energy delivered in use to said exposing station (12 to 14; 56 to 58; 72, 75, 76).

2. Apparatus according to claim 1 in which said source comprises a pulse operated source ( 1; 63, 64).

3. Apparatus according to claim 2 in which the pulse operated source comprises at least one laser (1; 63, 64).

4. Apparatus according to claim 3 in which the at least one laser comprises an excimer or nitrogen laser (1; 63, 64) which, in use, provides short pulses of radiant energy which comprise ultra violet light.

5. Apparatus according to claim 3 or claim 4 which comprises a plurality of lasers (63, 64), each one of said plurality of lasers being controlled by the controlling means (69, 77 to 81) so that, in use, a respective first one (63) of said plurality of lasers and a respective second one (64) of said plurality of lasers emit pulses of radiant energy at respectively different moments in time, the interval between said different moments in time being substantially greater than the intrinsic duration of said individual pulses of radiant energy and being less than one millisecond.

6. Apparatus according to claim 3 or claim 4 in which the at least one laser provides, in use, two short pulses of radiant energy spaced in time by an interval of less than one millisecond.

7. Apparatus according to claim 5 or claim 6 in which the interval is less than 10 microseconds and greater than 100 nanoseconds.

8. Apparatus according to claim 5 in which the first one and second one of said plurality of lasers comprise the same optical laser cavity.

9. Apparatus according to any preceding claim in which redistributing means comprises an optically transmitting fibre and/or light guide (10; 35; 41; 71).

10. Apparatus according to claim 9 in which said fibre and/or guide comprises a single core which, in use, provides substantially the sole route for radiant energy to pass from said source (1; 63,64) to said exposing station (12 to 14; 56 to 58; 72, 75, 76).

11. Apparatus according to claim 9 or claim 10 which includes imaging means (54,-55) arranged to reimage the spatial distribution of energy exiting from and at the emitting end section (53) of said fibre and/or guide, so that,in use, an image of part of said distribution is reproduced at the surface - (58) to be exposed at the exposing station (56 to 58).

12. Apparatus according to any one of claims 9 to 11 in which at least one of the receiving and emitting end sections (53) of the fibre and/or guide is optically bonded and/or matched to a transparent window (61) having a width substantially greater than the cross-section of said fibre and/or guide.

13. Apparatus according to claim 12 in which said transparent window (61) is anti-reflection coated on the face (62) remote from the fibre and/or guide.

14. Apparatus according to any one of claims 9 to 13 in which redistributing means includes a beam dissector (27 to 30; 31 to 37), said dissector having at least two distinct optical paths, so that, in use, radiant energy reaches the exposing station from said source via different ones of said distinct optical paths and said paths are so constructed as to rearrange the spatial distribution of said radiant energy in a piecewise manner prior to entry of said radiant energy into the receiving end section (35) of said fibre and/or guide.

15. Apparatus according to any one of claims 9 to 14 which includes focussing means (9; 36, 37; 70) so that, in use, radiant energy from said source (1; 63, 64) is converged to substantially the same point to facilitate entry into said fibre and/or guide - (10; 35; 41; 71).

16. Apparatus according to claim 15 in which said focussing means (36, 37) comprises more than one optical element the combination of which has different optical powers in two orthogonal planes each of which contains the optical axis of said focussing means.

17. Apparatus according to any preceding claim in which the controlling means comprises electronic means (15, 43 to 52; 78 to 81) for controlling the emission of said radiant energy by said source.

18. Apparatus according to claim 17 which includes electro-mechanical (4; 20, 21, 24, 25) and/or electro-optical means (69) controlled by said electronic means for blocking, in use, in whole or in part the passage (68) of said radiant energy from said source (1; 63, 64) to said exposing station.

19. Apparatus according to claim 17 or claim 18 in which the controlling means includes·a photosensor (15 to 17; 43; 60; 78) comprising a photocell - (15; 43; 78) arranged to receive photons in proportion to the level of said radiant energy which, in use, reaches the exposing station.

20. Apparatus according to claim 19 in which the photosensor includes phosphorescent means (17) which, following impingement of rays of energy from said source (1), emits secondary photons, said photons being received by said photocell (15).

21. Apparatus according to claim 19 which includes a curved partially reflecting surface (59; 77) in the path of rays between the emitting end section (53) of said fibre and/or guide and the position for the exposing station (56 to 58; 72, 75, 76), said curved surface being tilted so that, in use, a proportion of the energy exiting from said fibre and/or guide is reimaged to a position, spaced from said exposing station, where said proportion of the exiting energy impinges on said photosensor (60; 78).

22. Apparatus according to any one of claims 19 to 21 in which said photocell forms part of said electronic means (43 to 52) and provides a signal representative of the number of photons arriving at the exposing station, said electronic means being arranged to integrate said representative signal over a time period.

23. Apparatus according to claim 22 in which the electronic means includes means for processing - (48) said integrated signal ($V_E$) to control, in use, the level of exposure at said exposing station.

24. A method for producing uniform exposure at an exposing station comprising positioning a source of radiant energy (1, 63, 64); redistributing said radiant energy in a uniform manner within a rotationally symmetric divergent cone (42) and/or over a pre-determined cross-sectional area (53); controlling the level of said energy, and delivering said controlled and uniformly distributed energy to the exposing station (12 to 14; 56 to 58; 72, 75, 76).

FIG. 1.

# FIG. 2.

FIG. 4.

FIG. 3.

33

34

31

32

30

28

27

29

35

37

36

0 201 306

# FIG. 5.

0 201 306

# FIG. 6.

0 201 306

FIG.7.

FIG. 8.

0 201 306